# EUROPÄISCHE PATENTSCHRIFT

(11) **EP 1 086 880 B1**
(45) Veröffentlichungstag und Bekanntmachung des Hinweises auf die Patenterteilung: **03.12.2008**
(21) Anmeldenummer: 00203261.3
(22) Anmeldetag: 20.09.2000
(51) Int. Cl.: B62D 3/12, B62D 5/22

(54) **Kraftfahrzeuglenkgetriebe**
Automotive steering gear
Boîtier de direction de véhicule automobile

(30) Priorität: 23.09.1999 GB 9922483
(43) Veröffentlichungstag der Anmeldung: 28.03.2001
(73) Patentinhaber: Delphi Technologies, Inc., Troy, MI 48007 (US)
(72) Erfinder: Haupt, Jens, 64521 Gross Gerau (DE); Sciortino, Giacomo, 55129 Mainz-Ebersheim (DE)
(74) Vertreter: Denton, Michael John

(56) Entgegenhaltungen:
- DE-A- 2 634 054
- DE-A- 19 717 797
- DE-A- 19 811 917
- GB-A- 946 501
- GB-A- 1 383 517
- FA. KOBOLDMESSRING: "Dynamische Viskosität" INTERNET, [Online] XP002261913 Gefunden im Internet: <URL:http://www.koboldmessring.com/tech_ar ea/grundlag/Tabellen/tabell16.htm> [gefunden am 2003-11-18]
- PHYSIK TU-MÜNCHEN: "Viskosität" INTERNET, [Online] XP002261914 Gefunden im Internet: <URL:http://www.e20.physik.tu-muenchen.de/ ~cucke/medprakt/Viskositaet.PDF> [gefunden am 2003-11-18]

## Beschreibung

Die Erfindung betrifft ein Kraftfahrzeuglenkgetriebe nach dem Oberbegriff des Anspruchs 1 (vgl. GB 946 501 A).

Aus der DE 197 17 797 A ist eine Zahnstangenlenkung bekannt, bei der ein O-Ring als Dämpfungsmittel vorgesehen ist.

Aus der GB-A-1 383 517 ist ein Kraftfahrzeuglenkgetriebe bekannt, das eine mit Hydraulikflüssigkeit gefüllte Kammer als Dämpfungsmittel aufweist.

Die DE 198 11 917 A offenbart einen Kupplungsmechanismus für eine Zahnstange und deren Antriebsritzel mit einer Feder, deren Kennlinie mehrere lineare Abschnitte aufweist, die unstetig aneinandergrenzen.

Aus der DE 26 34 054 A ist ein Kraftfahrzeuglenkgetriebe bekannt, das eine elastische, geräuschdämpfende Platte aufweist.

Das Geräuschverhalten von Kraftfahrzeuglenkgetrieben der genannten Art ist verbesserungswürdig. Grund dafür sind Schwingungen von und zwischen Zahnstange und Ritzel, welche zu entsprechenden Klappergeräuschen führen können. Weil andererseits das Geräuschverhalten moderner Antriebe reduziert worden ist, gerät die Geräuschentwicklung von Nebenaggregaten, welche insoweit bisher kaum beachtet worden sind, zunehmend ins Blickfeld.

Es ist die Aufgabe der vorliegenden Erfindung, ein Kraftfahrzeuglenkgetriebe der eingangs genannten Art mit einem verbesserten Dämpfungsverhalten zu schaffen. Diese Aufgabe wird durch die Merkmale des Anspruchs 1 gelöst.

In besonders vorteilhafter Weise dämpft das Dämpfungsfluid Schwingungen im Bereich des Ritzeleingriffs, so dass schwingungsbedingte Geräuschentwicklung unterdrückt oder zumindest eingedämmt werden kann. Die Erfindung ist mit dem Vorteil verbunden, dass eine Geräuschdämpfung ermöglicht wird, ohne die grundsätzlichen Verzahnungsdaten im Eingriff zwischen Zahnstange und Ritzel (beispielsweise hinsichtlich Flankenüberdeckung oder Profilverschiebung) oder die grundsätzliche Bauweise verändern zu müssen.

Erfindungsgemäß ist ein viskoses Dämpfungsmittel vorgesehen. Dies eröffnet die Möglichkeit, die eingesetzte Flüssigkeit und deren physikalische Daten zu verändern, um das Lenkgetriebe an unterschiedliche Anwendungsfälle anpassen zu können. Mit anderen Worten kann einfach durch eine andere kinematische Viskosität der Flüssigkeit ein anderes Dämpfungsverhalten der Vorrichtung eingestellt werden, ohne zwingend die Geometriedaten der Vorrichtung verändern zu müssen.

Erfindungsgemäß ist als Dämpfungsfluid ein Gemisch aus einer nicht Newton'schen Flüssigkeit und einem Gas oder Gasgemisch vorgesehen. Das komprimierbare Gasvolumen zusammen mit der Flüssigkeit wirkt in diesem Falle wie eine Feder-Dämpfer-Baueinheit mit progressiver Federkennlinie. Das geschwindigkeitsabhängige Dämpfungsverhalten lässt sich im Wesentlichen über die kinematische Viskosität einstellen.

Weitere Einzelheiten der Erfindung gehen aus Unteransprüchen im Zusammenhang mit der Beschreibung und der Zeichnung hervor. In der Zeichnung zeigt:
Fig. 1: ein Teilschnitt durch ein unteres Ende einer Lenksäule mit einem Zahnstangenlenkgetriebe nach dem Stand der Technik;
Fig. 2: ein vergrößerter Schnitt durch ein nicht beanspruchtes Zahnstangenlenkgetriebe,
Fig. 3: ein Schnitt wie in Figur 2, jedoch durch ein beanspruchtes Zahnstangenlenkgetriebe,
Fig. 4: ein Lagerkörper mit einem als Einsatz gestalteten Abschnitt im Schnitt sowie vergrößert, und
Fig. 5: ein Deckel mit einem als Einsatz gestalteten Abschnitt.

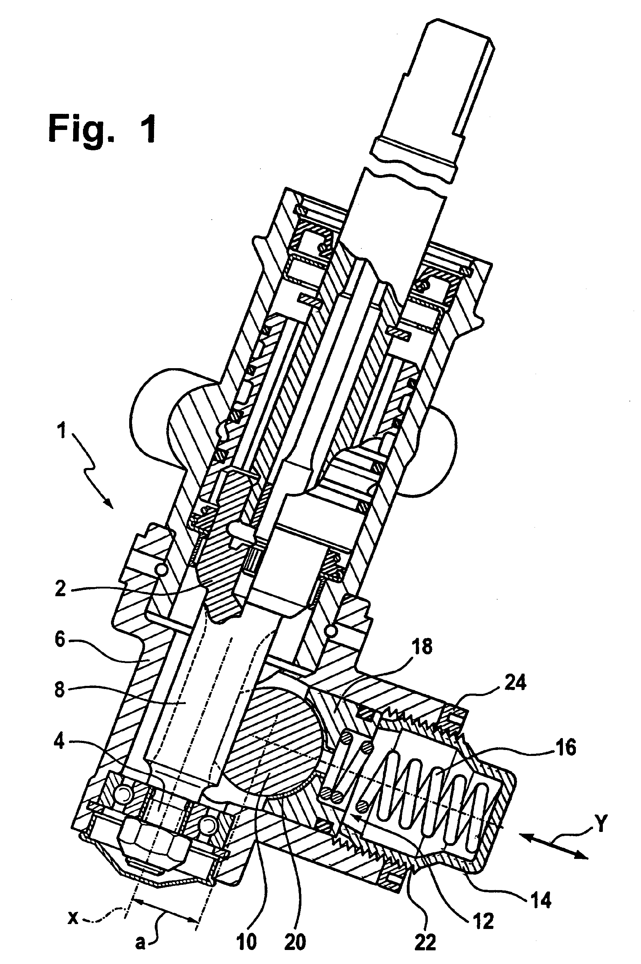

Figur 1 zeigt ein, an einem unteren Ende einer Lenksäule zu befestigendes, Lenkgetriebe 1 für ein Kraftfahrzeug. Die Lenksäule verfügt über eine Welle, welche mit einem Lenkrad (nicht gezeigt) verbindbar ist. Die Welle ist um ihre Achse drehbar und mit ihrem unteren Ende mit einer um ihre Achse x drehbaren Welle 2 des Lenkgetriebes 1 vorzugsweise formschlüssig, beispielsweise mittels einer Kerbverzahnung verbunden. Das untere Ende 4 der Welle 2 ist in einem Getriebegehäuse 6 drehbar gelagert angeordnet, und verfügt über ein Ritzel 8 zum Antrieb einer axial in Zeichenebene verschiebbaren Zahnstange 10, welche wiederum dem Verschwenken von Rädern (nicht gezeigt) dient. In dem Getriebegehäuse 6 ist ferner ein Lager 12 (für die Zahnstange 10) sowie ein Verschlussdeckel 14 mit einer zwischen Deckel 14 und Lager 12 eingespannten Feder 16 vorgesehen. Die unter einer bestimmten Vorspannkraft stehende Feder 16 soll eine permanente Anlage des Lager 12 an einem Rücken der Zahnstange 10, und infolge dieser Anpressung der Zahnstange 10 einen optimierten Eingriff des Ritzel 8 sicherstellen. Gleichzeitig wird dadurch eine Verschleißkompensation erreicht. Die Richtung der Vorspannkraft erstreckt sich im Wesentlichen senkrecht zu der Achse x. Vorzugsweise weist ein Lagerkörper 18 im Bereich seiner Anlage an einem Rücken der Zahnstange 10 eine reibungsvermindernde Beschichtung oder einen reibungsvermindernden Werkstoff 20 auf. Das Lenksystem ist infolgedessen sehr leichtgängig. Der Deckel 14 ist in das Getriebegehäuse 6 eingeschraubt und eine auf ein Deckelgewinde 22 aufgeschraubte Sicherungsmutter 24 arretiert eine bestimmte axiale Zustellung des Deckels 14 in Richtung auf das Ritzel 8. Eine ideale Einstellung des Deckels 14 gewährleistet keinerlei axiales Spiel betreffend einen Achsabstand a zwischen Ritzel 8 und Zahnstange 10 und erlaubt dennoch eine leichtgängige Funktion. Diese Einstellung wird mit einem so genannten 0° backoff-angle beschrieben. Sofern der Deckel 14 um bestimmte Verdrehwinkel aus dem Gehäuse 6 herausgedreht wird, erhöht sich das Spiel und gleichzeitig reduziert sich auch die Federvorspannkraft. Beispielsweise geht meist mit einem backoff-Winkel von etwa 60° eine starke Geräuschentwicklung einher. Für Test- und Prüfzwecke kann also der Deckel 14 verschieden weit herausgeschraubt werden, um unterschiedlich starke Verschleißzustände (mit entsprechendem Spiel, beziehungsweise vergrößertem Achsabstand a) zu simulieren. Weil jedes Lenkgetriebe 1 mit wachsender Betriebszeit verschleißbehaftet ist, schaltet die Feder 16 gewissermaßen eventuell auftretendes Spiel in der Anlage zwischen Ritzel 8 und Zahnstange 10 aus, indem der Lagerkörper 18 entsprechend nachgeführt wird. Die Federvorspannkraft kann einfach durch Veränderung der Einschraublänge des Deckels 14 in das Gehäuse 6 verändert werden, bis eine metallische Anlage eintritt. Dieser Zustand ist dadurch charakterisiert, dass eine unmittelbare metallische Anlage zwischen Ritzel 8, Zahnstange 10, Lagerkörper 18 und Deckel 14 eintritt. Soweit entspricht das beschriebene Getriebe im Wesentlichen einem bekannten Stand der Technik. Zwar wird nun das Lager 12 infolge der Feder 16 in Richtung auf die Zahnstange 10 gedrückt, aber es kann dennoch unter bestimmten Bedingungen in Abhängigkeit von Daten wie Verschleißzustand, Federvorspannung, Anregungsfrequenz, Lenkeinschlag und Straßenzustand zu Klappergeräuschen kommen. Diese Gefahr besteht insbesondere, wenn die Schwingungsanregung des vorgespannten Lagers 12 in einem Bereich einer Eigenfrequenz des Systems oder einem bestimmten Vielfachen einer Eigenfrequenz erfolgt.

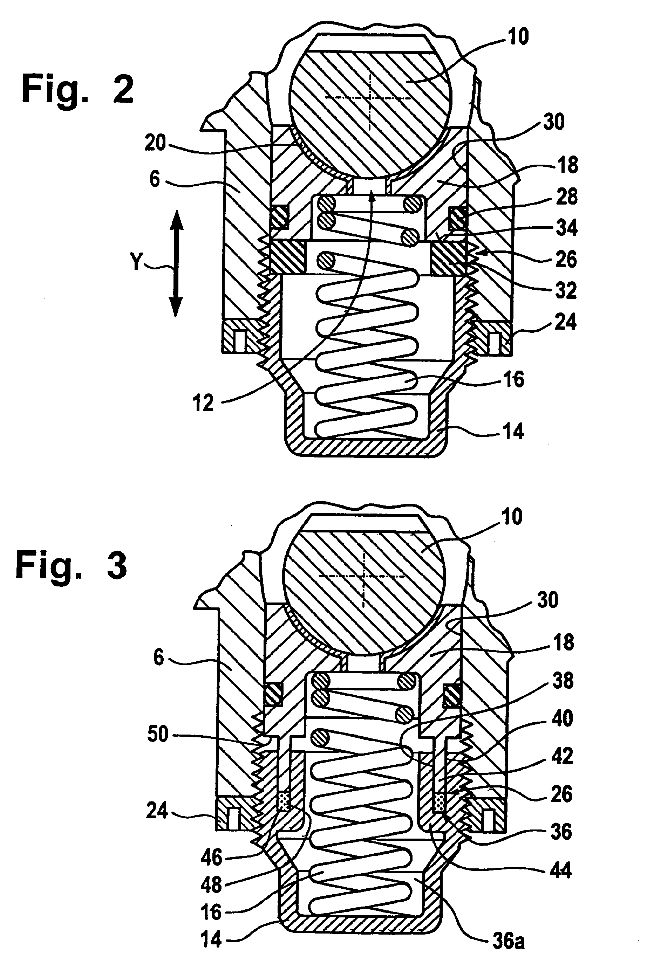

In Figur 2 ist ein Elastomerring als Dämpfungsmittel 26 zwischen Lager 12 und Deckel 14 vorgesehen. Es wird eine Bewegungsdämpfung in Pfeilrichtung Y zwischen dem Gehäuse 6 als fahrzeugfestem Bezugspunkt und einem dazu relativ bewegbaren Lagerkörper 18 vorgenommen.

Der Lagerkörper 18 ist in einer zylindrischen Bohrung 30 des Getriebegehäuses 6 axial verschiebbar angeordnet, und es sind zwei elastomerische Ringe 28,32 vorgesehen. Ein erster der Ringe 28 ist am Umfang des Lagerkörpers 18 vorgesehen und liegt bewegungsdämpfend in radialer Richtung an der Bohrungswandung an. Dieser Ring 28 unterscheidet sich von einem einfachen Dichtungsring durch seine Dämpfungswirkung. Diese ist auch auf entsprechende Durchmessertoleranzabstimmung der involvierten Bauteile zurückzuführen. Der zweite Ring 32 liegt auf einer Seite fest an dem die Bohrung 30 verschließenden Deckel 14 an, und an seiner anderen Seite ist eine Rückseite 34 des Lagerkörpers 18 dämpfend angelegt. Das gesamte System ist so abgestimmt, dass selbst eine verschleißbedingte Nachführung des Lagerkörpers 18 in Richtung auf das Ritzel 8 (infolge der Federkraft) nicht die dämpfende Abstützung durch den Ring 32 unterbindet.

Generell kann das Dämpfungsmittel 26 als separates Bauteil ausgebildet sein. Dadurch ist es im Reparaturfall leicht ersetzbar. Im Rahmen eines Austauschbau wird es dadurch ferner einfach ermöglicht, Baureihen mit Dämpfungsmittel 26 und Baureichen ohne Dämpfungsmittel 26 herzustellen. Alternativ hierzu kann das Dämpfungsmittel 26 an oder in dem Gehäuse 6, an dem Deckel 14, an der Feder 16 und / oder der Sicherungsmutter 24 integriert ausgebildet sein, wodurch sich eine besonders kompakte Bauweise ergibt. Das Dämpfungsmittel 26 verhindert infolge seiner bewegungsdämpfenden Eigenschaft einen klappernden Kontakt zwischen dem Ritzel 8 und der Zahnstange 10.

Figur 3 zeigt eine beanspruchte Ausführungsform, mit einem viskosen Dämpfungsmittel 26. Es hat sich gezeigt, dass eine viskose Dämpfung, insbesondere unter Verwendung von nicht Newton'schen Flüssigkeiten wie beispielsweise Silikonöl, Schwingungen besonders wirksam dämpfen kann. Dabei macht man sich (innere) Scherspannungen einer Flüssigkeit in einem Spalt 38,40 zu Nutze. Die scherspannungsbedingten Rückstellkräfte greifen an der Oberfläche von zueinander benachbarten sowie relativ zueinander bewegbaren Bauteilen (Lagerkörper 18 und beispielsweise Deckel 14) an. Ein weiterer Effekt ist die Aufzehrung der Schwingungsenergie infolge innerer Flüssigkeitsreibung und Erwärmung. Mit anderen Worten wird infolge jeder Relativverschiebung des Lagerkörpers 18 relativ zu dem Deckel 14 in dem Spalt 38,40 eine flüssigkeitsinterne Scherspannung erzeugt, welche an einer flüssigkeitsexponierten Oberfläche des Lagerkörpers 18 angreift, und ihn entgegen seiner Bewegungsrichtung dämpft. Versuche haben gezeigt dass die viskose Dämpfung insbesondere in dem Frequenzbereich zwischen 1 und 30 Hz wirksam ist, welcher hauptsächlich für angeregte Schwingungen im Fahrzeugchassisbereich verantwortlich ist.

Das Dampfungsmittel 28 weist einen gasdicht abgeschlossenen Raum 36 mit zwei Spalten 38,40 zwischen zwei relativ zueinander bewegbaren Abschnitten 42,44 auf.

In dem Raum 36 ist eine inkompressible, nicht Newton'sche Flüssigkeit 46 sowie ein kompressibles Gas oder Gasgemisch 48 vorgesehen. Ferner sind die Räume 36,36a druckausgeglichen, das heißt sie verfügen an jeder Stelle über denselben Druck. Es wird nun die sich in der Flüssigkeit 46 infolge des Spaltes 38,40 und der Verschiebung aufgebaute Schubspannung für die Dämpfungsfunktion ausgenutzt. Zu diesem Zweck weist jeder der Spalte eine konstante Spaltweite zwischen den beiden Abschnitten 42,44 in einer Größenordnung von etwa 0,1 bis 5 mm auf. Der Spalt 38,40 befindet sich zwischen einem Teil des Getriebegehäuse 6 (oder nach Figur 3 einem getriebegehäusefesten Deckel 14) und einem Abschnitt des Lagerkörper 18.

In dem Raum 36 ist ein Silikonöl/Luft-Verhältnis von 0,1 bis 99 % denkbar. Eine besonders vorteilhafte Ausführungsform weist einen Raumanteil von 85 % Silikonöl und 15 % Luft bei einer Spaltweite von 0,5 mm und einer kinematischen Viskosität von 300 000 cSt auf. Grundsätzlich können je nach den übrigen Bedingungen Silikonöle mit einer Viskosität zwischen 1*10⁴ und 1*10⁶ cSt (Centistoke, Einheit mm²/s) zum Einsatz kommen. Allen genannten Viskositätsangaben liegt dabei eine Temperatur von 40 °C (gemäß DIN-ISO) zugrunde.

Bei konstanter Spaltweite kann in dem Bereich einer Viskosität von 1*10⁴ bis 1*10⁶ cSt ein gezielter Luftanteil von 1-95 % vorgesehen sein, um ein bestimmtes Dämpfungsverhalten vorzusehen.

Mit anderen Worten sind je nach Wunsch vielfache Varianten und Abstimmungen denkbar, ohne das Grundprinzip der viskosen Dämpfung zu verlassen.

Das Ausführungsbeispiel nach der Figur 3 weist insgesamt zwei zylindrische Spalte 38,40 mit konstanter Spaltweite auf, welche konzentrisch zueinander angeordnet sind, und unterschiedlich große Durchmesser aufweisen. Jeder zusätzlich vorgesehene Spalt, oder alternativ eine Vergrößerung der wirksam flüssigkeitsbenetzten Spaltlänge, erhöht die viskose Dämpfungswirkung und umgekehrt. Folglich können auch diese Größen für die Anpassung des Systems herangezogen werden. Eine konzentrische Spaltanordnung wird grundsätzlich in solchen Einbaufällen bevorzugt, wenn eine eingeschränkte Baulänge zur Verfügung steht. Um eine progressiv zunehmende oder gleichbleibende Dämpfungswirkung bereitzustellen, ist es denkbar, dass ein oder mehrere Spalte 38,40, oder nur Teile derselben nicht mit konstanter Spaltweite versehen sind. Vielmehr ist es denkbar, dass sich ein Spalt mit zunehmendem Eingriff der Abschnitte 42,44 verengt oder erweitert. Auf diese Weise ist ein entsprechender Anstieg oder Abfall der Scherspannungen erzeugbar, was mit einem entsprechenden Anstieg oder Abfall der Dämpfungskräfte korreliert.

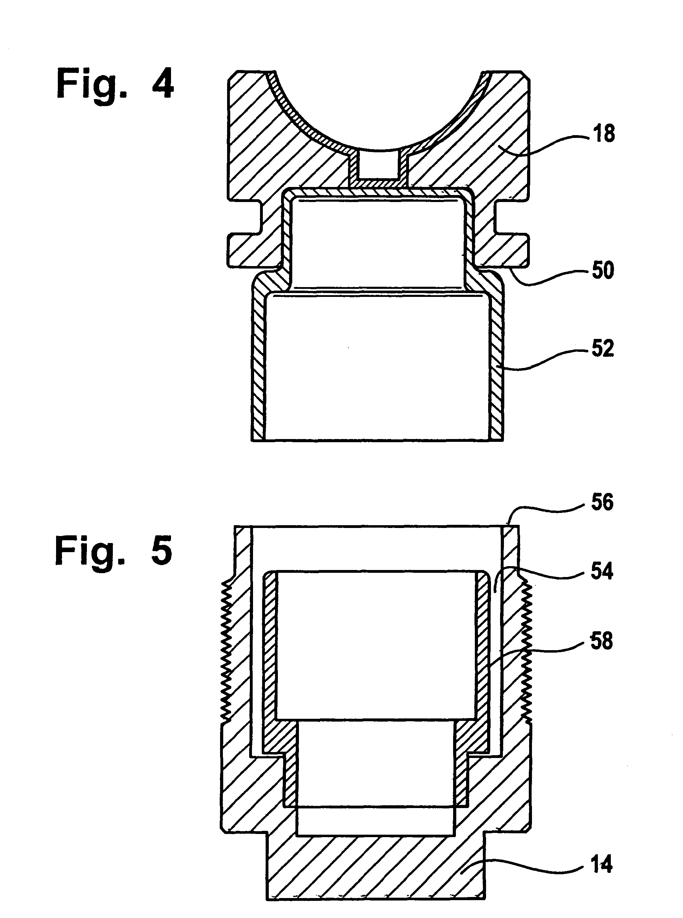

Wie aus den Figuren 4 und 5 zu ersehen ist, weist der Lagerkörper 18 an einer Rückseite 50 einen zylindrischen, rohrförmigen Abschnitt 52 auf, welcher in eine zylindrische axiale Nut 54 an einer Stirnseite 56 des Deckel 14 derart eingreift, dass er in der Nut 54 axial verschiebbar ist.

Den Figuren 4 und 5 ist weiterhin zu entnehmen, dass der Abschnitt 52 und eine innere Nutwandung 58 als Einsatz konstruiert sind, welche jeweils in den Deckel 14 oder in den Lagerkörper 18 eingeschoben und daran befestigt sind. Jeder Einsatz besteht beispielsweise aus einem sehr präzise umgeformten Blechmaterial, welches fest in den Deckel oder den Lagerkörper eingesetzt ist. Dies senkt die Herstellungskosten im Vergleich mit einer aus Vollmaterial mittels Zerspanung hergestellten Lösung. Es ist grundsätzlich auch denkbar, den Deckel aus Kunststoff herzustellen.

## Patentansprüche

1. Kraftfahrzeuglenkgetriebe (1) mit einem Ritzel (8) und mit einer Zahnstange (10), welche in einem Getriebegehäuse (6) angeordnet sind, wobei im Bereich einer Eingriffsstelle zwischen Ritzel (8) und Zahnstange (10) ein elastisch vorgespanntes Lager (12) für die Zahnstange (10) vorgesehen ist, wobei dem Lager (12) ein Dämpfungsfluid (26) zum Dämpfen von Schwingungen zugeordnet ist,
**dadurch gekennzeichnet, dass**
das Dämpfungsfluid ein Gemisch aus einer nicht Newton'schen Flüssigkeit (46) und einem Gas oder Gasgemisch (48) ist.

2. Kraftfahrzeuglenkgetriebe nach Patentanspruch 1, **dadurch gekennzeichnet, dass** ein Gas / Silikonölgemisch in einem Verhältnis von 1 - 95 % vorgesehen ist.

3. Kraftfahrzeuglenkgetriebe nach Anspruch 1, **dadurch gekennzeichnet, dass** die Flüssigkeit Silikonöl ist.

4. Kraftfahrzeuglenkgetriebe nach einem oder mehreren der vorhergehenden Patentansprüche, **dadurch gekennzeichnet, dass** das Dämpfungsfluid in einem Raum (36,36a) mit einem Spalt (38,40) zwischen zwei Abschnitten (42,44) vorgesehen ist, von denen ein Abschnitt (44) gehäusefest vorgesehen ist, und einstückig mit dem Gehäuse (6) oder fest an diesem angeordnet ist, und der zweite Abschnitt (42) zusammen mit dem Lager (12) sowie relativ zu dem Gehäuse (6) bewegbar ist.

5. Kraftfahrzeuglenkgetriebe nach Patentanspruch 4, **dadurch gekennzeichnet, dass** zwischen den beiden Abschnitten (42,44) mehrere Spalte (38,40) vorgesehen sind.

6. Kraftfahrzeuglenkgetriebe nach Patentanspruch 5, **dadurch gekennzeichnet, dass** der eine der Abschnitte (42) insbesondere zylindrisch rohrförmig ist, und dass dieser Abschnitt zur Bildung von zwei Axialspalten in eine vorzugsweise zylindrische Nut (54) des anderen Abschnitt (44) eingreift, und dass die beiden Abschnitte (42,44) relativ zueinander in Dämpfungsrichtung verschiebbar sind.

7. Kraftfahrzeuglenkgetriebe nach Patentanspruch 6, **dadurch gekennzeichnet, dass** die zylindrische Nut (54) an einer Stirnseite (56) des Deckel (14) vorgesehen ist, und dass der eine der Abschnitte (42) an einer Rückseite (50) eines Lagerkörpers (18) angeordnet ist.

## Claims

1. Motor vehicle steering gear (1) having a pinion (8) and a rack (10) which are arranged in a gear housing (6), an elastically biased bearing (12) for the rack (10) being provided in the region of a point of engagement between pinion (8) and rack (10), a damping fluid (26) for damping vibrations being associated with the bearing (12), **characterised in that** the damping fluid is a mixture of a non-Newtonian fluid (46) and a gas or gas mixture (48).

2. Motor vehicle steering gear according to claim 1, **characterised in that** the gas / silicone oil mixture is provided in a ratio of 1 - 95%.

3. Motor vehicle steering gear according to claim 1, **characterised in that** the fluid is silicone oil.

4. Motor vehicle steering gear according to one or more of the preceding claims, **characterised in that** the damping fluid is provided in a chamber (36, 36a) having a gap (38, 40) between two sections (42, 44), of which one section (44) is fixed to the housing and arranged in one piece with the housing (6) or permanently on the latter, and the second section (42) is movable together with the bearing (12) and relative to the housing (6).

5. Motor vehicle steering gear according to claim 4, **characterised in that** between the two sections (42, 44) are provided several gaps (38, 40).

6. Motor vehicle steering gear according to claim 5, **characterised in that** one of the sections (42) is in particular cylindrically tubular, and **in that** this section engages in a preferably cylindrical groove (54) of the other section (44) to form two axial gaps, and **in that** the two sections (42, 44) are slidable relative to each other in the direction of damping.

7. Motor vehicle steering gear according to claim 6, **characterised in that** the cylindrical groove (54) is provided at a front side (56) of the cover (14), and **in that** one of the sections (42) is arranged at a rear side (50) of a bearing body (18).

## Revendications

1. Mécanisme de direction pour véhicule automobile (1), comprenant un pignon (8) et une crémaillère (10) qui sont agencés dans un boîtier de mécanisme (6), dans lequel un palier (12) à précontrainte élastique pour la crémaillère (10) est prévu dans la région d'un emplacement d'engagement entre le pignon (8) et la crémaillère (10), et dans lequel un fluide d'amortissement (26) est associé au palier (12) pour l'amortissement d'oscillations, **caractérisé en ce que**
le fluide d'amortissement est un mélange d'un liquide non newtonien (46) et d'un gaz ou d'un mélange de gaz (48).

2. Mécanisme de direction pour véhicule automobile selon la revendication 1, **caractérisé en ce qu'**il est prévu un mélange gaz/huile de silicone dans un rapport de 1-95 %.

3. Mécanisme de direction pour véhicule automobile selon la revendication 1, **caractérisé en ce que** le liquide est de l'huile de silicone.

4. Mécanisme de direction pour véhicule automobile selon l'une ou plusieurs des revendications précédentes, **caractérisé en ce que** le fluide d'amortissement est prévu dans une chambre (36, 36a) avec une fente (38, 40) entre deux portions (42, 44), parmi lesquelles une portion (44) est prévue solidaire du boîtier et agencée d'un seul tenant avec le boîtier (6) ou de manière fixe sur celui-ci, et la seconde portion (42) est déplaçable conjointement avec le palier (12) et aussi par rapport au boîtier (6).

5. Mécanisme de direction pour véhicule automobile selon la revendication 4, **caractérisé en ce que** plusieurs fentes (38, 40) sont prévues entre les deux portions (42, 44).

6. Mécanisme de direction pour véhicule automobile selon la revendication 5, **caractérisé en ce que** l'une des portions (42) est en forme de tube, en particulier cylindrique, et **en ce que** cette portion s'engage, pour former deux fentes axiales, dans une rainure (54), de préférence cylindrique, de l'autre portion (44), et **en ce que** les deux portions (42, 44) sont déplaçables l'une par rapport à l'autre dans la direction d'amortissement.

7. Mécanisme de direction pour véhicule automobile selon la revendication 6, **caractérisé en ce que** la rainure cylindrique (54) est prévue sur une face frontale (56) du couvercle (14), et **en ce que** l'une des portions (42) est agencée sur une face postérieure (50) d'un corps de palier (18).
